# EUROPEAN PATENT SPECIFICATION

(11) **EP 1 639 747 B1**
(45) Date of publication and mention of the grant of the patent: **19.05.2010**
(21) Application number: 04755656.8
(22) Date of filing: 18.06.2004
(51) Int. Cl.: H04L 12/24

(54) **SYSTEM AND METHOD FOR DESCRIBING NETWORK COMPONENTS AND THEIR ASSOCIATIONS**
SYSTEM UND VERFAHREN ZUR BESCHREIBUNG VON NETZWERKKOMPONENTEN UND DEREN ASSOZIATION
SYSTEME ET PROCEDE POUR DECRIRE DES COMPOSANTS RESEAU ET LEURS ASSOCIATIONS

(30) Priority: 30.06.2003 US 611596
(43) Date of publication of application: 29.03.2006
(73) Proprietor: Intel Corporation, Santa Clara, CA 95052 (US)
(72) Inventor: ROVER, Jeremy, Hillsboro, OR 97124 (US); SISTLA, Amber, Hillsboro, OR 97124 (US)
(74) Representative: Beresford, Keith Denis Lewis
(86) International application number: PCT/US2004/019615
(87) International publication number: WO 2005/006652

(56) References cited:
- GB-A- 2 365 252
- HERUR V ET AL: "Management of databases using SNMP: a framework for a unified database MIB" INFORMATION NETWORKING, 1998. (ICOIN-12). PROCEEDINGS., TWELFTH INTERNATIONAL CONFERENCE ON TOKYO, JAPAN 21-23 JAN. 1998, LOS ALAMITOS, CA, USA,IEEE COMPUT. SOC, US, 21 January 1998 (1998-01-21), pages 29-32, XP010265272 ISBN: 0-8186-7225-0
- SHAWN A. ROUTHIER ET AL.: "Management INformation Base for the Internet Protocol (IP) draft-ietf-ipv6-rfc2011-update-02.txt" IETF IPV6 MIB REVISION DESIGN TEAM, February 2003 (2003-02), XP015002376

## Description

### RELATED APPLICATIONS

This nonprovisional patent application is related to the following contemporaneously filed nonprovisional patent applications: U.S. patent application Scr. No. 10/611,787, entitled, "System and Method for Programmatically Changing the Physical Network Location of a Network Device;" U.S. patent application Ser. No. 10/610,989, entitled "System and Method for Dynamically Configuring and Transitioning Wired and Wireless Networks;" U.S. patent application Ser. No. 10/611,591, entitled "System and Method for Synchronous Configuration of Dynamic Host Configuration Protocol (DHCP) Server and Router Interfaces"; and U.S. patent application Ser. No. 10/611,786, entitled "System and Method for the Design and Description of Networks."

### TECHNICAL FIELD

Embodiments of the invention generally relate to the field of networks and, more particularly, to a system and method for describing network components and their associations.

### BACKGROUND

Mobile networking technologies are driving an evolution in the use and structure of networks. For example, users of mobile networking technologies expect to stay connected as they move from place to place and from network to network. Furthermore, users of mobile networking technologies expect easy and seamless network interface transitions as they move from place to place.

. The term network component broadly refers to a node (e.g., a desktop, laptop, etc.) or a collection of nodes (e.g., a virtual private network, a subnet, a virtual local area network, etc.). The term node refers to a network component having a network interface. Examples of a node include switches, routers, servers, clients, workstations, laptops, handhelds, printers, hubs, and the like.

The movement of network components from place to place and network to network fosters constantly changing network infrastructures and topologies. Network components are typically configured to interact with particular network infrastructures and topologies. The term configuration can be used with respect to a network component or to an entire network. When used in association with a network component, configuration refers to the settings of software, hardware, and firmware that enable the network component to exchange information with a network. In a broader sense, configuring a network refers to configuring a plurality of network components to exchange information with one other.

Modem networking technologies increase the variety of network components that interact with a network and, also, the frequency at which these interactions occur. These interactions produce a combinational explosion of heterogeneous networks composed of many different network components each having a distinct configuration. This combinational explosion of heterogeneous networks is further complicated by the possibility that an initial network configuration changes over time as network components are added and removed from the network. Managing the interactions between network components is made more complicated because there is no standard format for describing network components and their associations.
From the publication by Durer V et al.; "Management of databases using SNMP: a framework for a unified database MIB" it is known to manage databases using Simple Network Management Protocol.
From the publication by Shawn A. Routhier et al.: "Management Information Base for the Internet Protocol (IP) draft-ictf-ipv6-rfc2011-updatc-02.txt" it is known to use managed objects for implementations of the Internet Protocol (IP) in an IP version independent manner.

### BRIEF DESCRIPTION OF THE DRAWINGS

Embodiments of the invention are illustrated by way of example, and not by way of limitation, in the figures of the accompanying drawings in which like reference numerals refer to similar elements.
**Figure 1** is an illustration of an exemplary structure that may be used to describe network components and their associations.
**Figure 2** Illustrates network resource and association file 200 implemented, according to an embodiment of the invention, to describe a plurality of network components and their associations.
**Figure 3** is block diagram illustrating an embodiment of the invention abstracted into four layers.
**Figure 4** is an illustration of an exemplary current network state snapshot 400.
**Figure 5** is an exemplary illustration of network resource wrapper function call 500 with possible function parameters.
**Figure 6** illustrates exemplary network configuration request 600.
**Figure** 7 is a conceptual illustration of selected interactions between abstract functional layers in network 700, according to an embodiment of the invention.
**Figure 8** is a flow diagram illustrating certain aspects of a method for describing network components and their relationships, according to an embodiment of the invention.
**Figure 9** is a simplified block diagram of selected elements of exemplary node 1000, implemented according to an embodiment of the invention.
**Figure 10** is a block diagram of selected elements of exemplary network 1000, implemented according to an embodiment of the invention.

### DETAILED DESCRIPTION

Embodiments of the invention provide a system and method for describing network components and the associations between the described network components. In an embodiment of the invention, a network management tool uses the description to dynamically configure a network and transition nodes within the network. As further described below, network components (and their associations) are categorized into a number of different sections to facilitate a standard description of the categorized network components. In an embodiment of the invention, the categorization is based on the capabilities of the described network component.

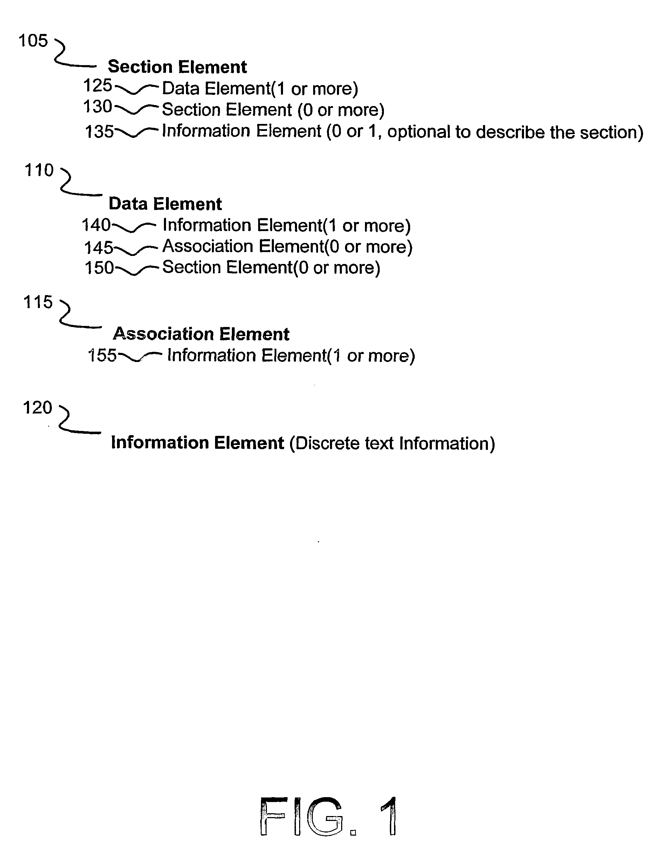

FIG. 1 is an illustration of an exemplary structure that may be used to describe network components and their associations. In an embodiment of the invention, network components and their associations are described using four basic elements: section element 105, data element 110, association element 115, and information element 120. A person of ordinary skill in the art will appreciate that a description of network resources and their associations may include different elements than those shown in FIG. 1, in alternative embodiments of the invention.

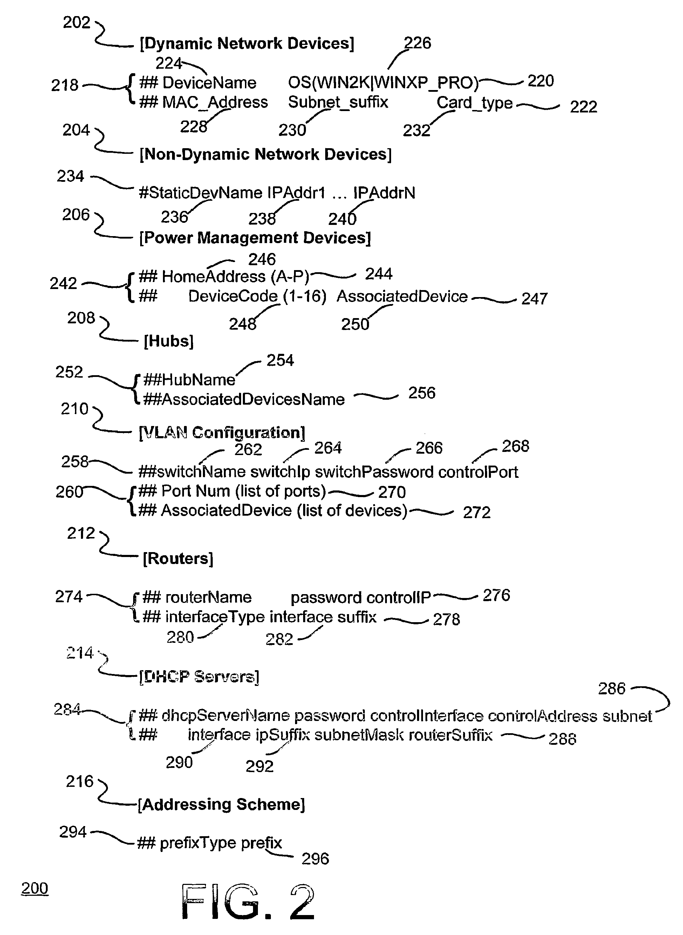

Section element 110 may be used to describe, for example, one or more network components having a particular capability (e.g., a router). Using section elements to categorize network components based on their capabilities is further illustrated in FIG. 2. Section element 105 includes one or more data elements 125. In an embodiment of the invention, section element 105 may also include zero or more section elements 130. Section element 105 may optionally include information element 135, in an embodiment of the invention.

Data element 110 may be used to describe, for example, a particular portion of a network component. For example, a section element may describe a router and a data element within the section element may describe a router interface of the router. A more detailed discussion of the relationship between section elements and data elements is provided below with regards to FIG. 2. Date element 110 includes one or more information elements 140, in an embodiment of the invention. Data element 110 optionally includes association element 145, in an embodiment of the invention. As will be further described below, association element 145 describes an association between the described network component and another network component.

Association element 115 includes one or more information elements 155, in an embodiment of the invention. Information elements 155 indicate an association between a previously defined element and the element that encompasses association element 115. Information element 120 is a basic unit used to store information in an embodiment of the invention.

FIG. 2 Illustrates network resource and association file 200 implemented, according to an embodiment of the invention, to describe a plurality of network components and their associations. Network resource and association file 200 includes: dynamic network device section 202, non-dynamic network device section 204, power management device section 206, hubs section 208, Virtual Local Area Network (VLAN) switch section 210, router section 212, Dynamic Host Configuration Protocol (DHCP) server section 214, and addressing scheme section 216. A DHCP server refers to a network component that provides network administrative services in compliance with Request For Comments 2131 entitled, "Dynamic Host Configuration Protocol," R. Droms, March 1997. A person of ordinary skill in the art will appreciate that alternative embodiments of network resource and association file 200 may include additional, fewer, and/or other sections than those depicted in FIG. 2.

The term dynamic network device refers to a network component whose IP addresses may change over time and that can be moved from one location on a network to another location. Examples of dynamic devices include, but are not limited to, laptops, access points, personal digital assistants, etc. Dynamic network device section 202 includes section element 218 to describe a dynamic network device. Section element 218, in turn, includes data elements 220 and 222, in an embodiment of the invention. Data element 220 includes information elements 224 and 226 to respectively store a device name and an operating system used by the device. Data element 222 includes information elements 228, 230, and 232 to describe a network interface of the device, in the illustrated embodiment of the invention. Device section element 213 may be repeated, as necessary, to describe additional dynamic network devices. A person of ordinary skill in the art appreciates that data elements 220 and 222 may include fewer, additional, and/or other information elements, in alternative embodiments of the invention.

The term non-dynamic network device refers to a network component whose IP address is static. Non-dynamic network devices may include, but are not limited to, Virtual Private Networks (VPNs). Non-dynamic network device section 204 includes device section element 234. Device section element 234 includes a single data element containing information elements 236, 238, and 240. In the illustrated embodiment, information elements 236, 238, and 240 specify the static IP address(es) corresponding to the non-dynamic network device. Device section element 234 may be repeated, as necessary, to describe additional non-dynamic network devices. A person of ordinary skill in the art appreciates that the structure of device section element 234 may be different in alternative embodiments of the invention.

Power management section 206 contains a list of power management modules used to programmatically apply power to (and remove power from) specific network components, in an embodiment of the invention. Controlling the application of power to network components is useful during network configurations and transitions as is further described in related U.S. patent application Ser. No. 10/610,989. Power management section 206 includes module section element 242 to describe a power management module. Module section element 242 includes data elements 244 and 247. Data element 244 contains information element 246 to specify a home address for the described power management module. In the illustrated embodiment, data element 247 includes information element 248 and association element 250. Association element 250 specifies a network element whose power is controlled by the described power management module. Similarly, a person of ordinary skill in the art appreciates that the structure of power management section 206 may vary in alternative embodiments of the invention.

Hub section 208 includes hub section element 252, in the illustrated embodiment of the invention. Hub section element 252 includes a data element that contains information element 254 and one or more association elements 256. Information element 254 specifies, for example, the name of the described hub. Association element(s) 256 specify one or more network components that are attached to the named hub. A person of ordinary skill in the art appreciates that hub section element 252 can be repeated, as necessary, to describe additional hubs. Similarly, a person of ordinary skill in the art appreciates that the structure of hub section element 252 may vary in alternative embodiments of the invention.

VLAN switch section 210 includes data element 258 and ports section element 260, in an embodiment of the invention. Data element 258 contains information elements 262, 264, 266, and 268 which may contain detailed information about the described VLAN switch in an embodiment of the invention. Port section element 260 includes a data element that, in turn, contains data element 270 and association element(s) 272. Data element 270 contains an information element to specify a port number of the described VLAN switch. Association element(s) 272 specify one or more network components that are accessible through the particular port. A person of ordinary skill in the art appreciates that the structure of VLAN switch section 210 may vary in alternative embodiments of the invention.

Router section 212 includes one or more router section elements 274. Each router section element(s) includes data element 276 and one or more router interface section element(s) 278, in the illustrated embodiment of the invention. Data element 276 contains one or more information elements to provide details about the described router (e.g., the router's name and a password with which to access the router). Each router interface section element(s) 278 corresponds to an interface of the described router, in an embodiment of the invention. Router interface section element 278 may include a data element(s) that, in turn, contains information elements (e.g., information elements 280 and 282) to specify the details of the particular router interface (e.g., an interface number and/or a type of interface). A person of ordinary skill in the art appreciates that the structure of router section 212 may vary in alternative embodiments of the invention.

DHCP server section 214 includes one or more DHCP server section element(s) 284. Each DHCP server section element(s) 284 includes data element 286 and one or more DHCP server interface section element(s) 288, in the illustrated embodiment of the invention. Data element 286 contains one more information elements to specify details about the described DHCP server. Each DHCP server interface section element 288 corresponds to an interface of the described DHCP server, in an embodiment of the invention. DHCP server interface section element 288 includes a data element that contains information elements (e.g., information elements 290 and 292) to provide details about a particular interface of the DHCP server. A person of ordinary skill in the art appreciates that the structure of DHCP server section 214 may vary in alternative embodiments of the invention.

Addressing scheme section 216 provides addressing scheme information to enable embodiments of the invention to determine IP addresses for network components listed in network resource and association file 200. Addressing scheme section 216 includes one or more addressing scheme section elements 294. In an embodiment of the invention, IP addresses are divided into prefixes and suffixes. In such an embodiment, information elements within addressing scheme section element 294 (e.g., information element 296) specify an JP address prefix for a network corresponding to network resource and association file 200. An IP address for a listed network component may be determined by combining the prefix listed in information element 294 with an IP address suffix stored in an information element of the listed network component (e.g., information element 230). A person of ordinary skill in the art appreciates that the structure of addressing scheme section 216 may vary in alternative embodiments of the invention.

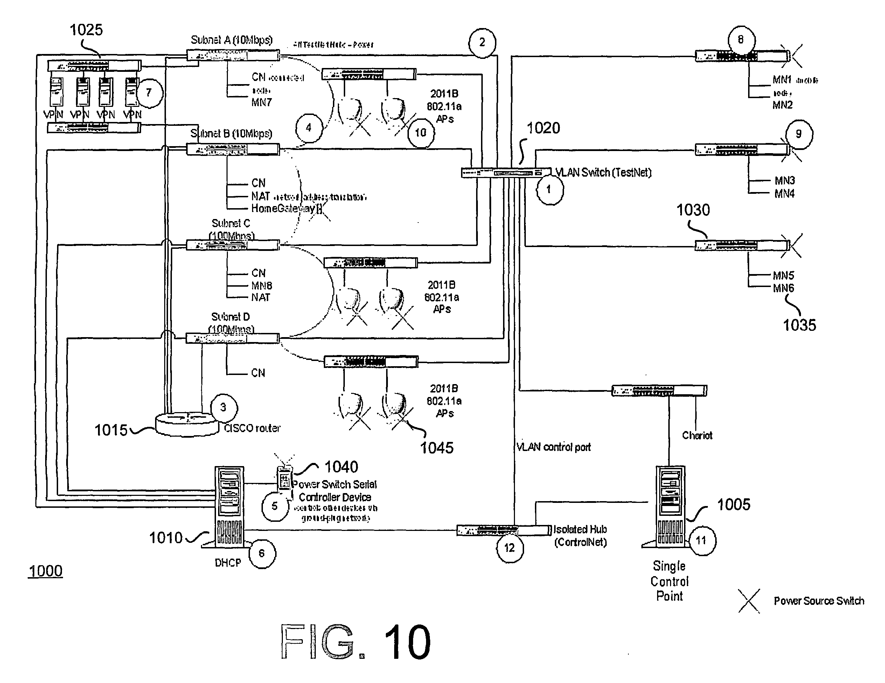

A network management agent (e.g., network management agent 1050, shown in FIG. 10) can use the standardized format of network resource and association file 200 to dynamically sort, allocate, and manage associations of resources according to predefined algorithms. By adhering to a standard specification for describing network components, a network management agent can use network resource and association file 200 to dynamically determine resource availability and allocate network resources based on that information. For example, in related U.S. patent application Ser. No. 10/610,989, the standardized format of network resource and association file 200 enables dynamic configurations and transitions of networks.

### OVERVIEW OF THE FUNCTIONAL LAYERS

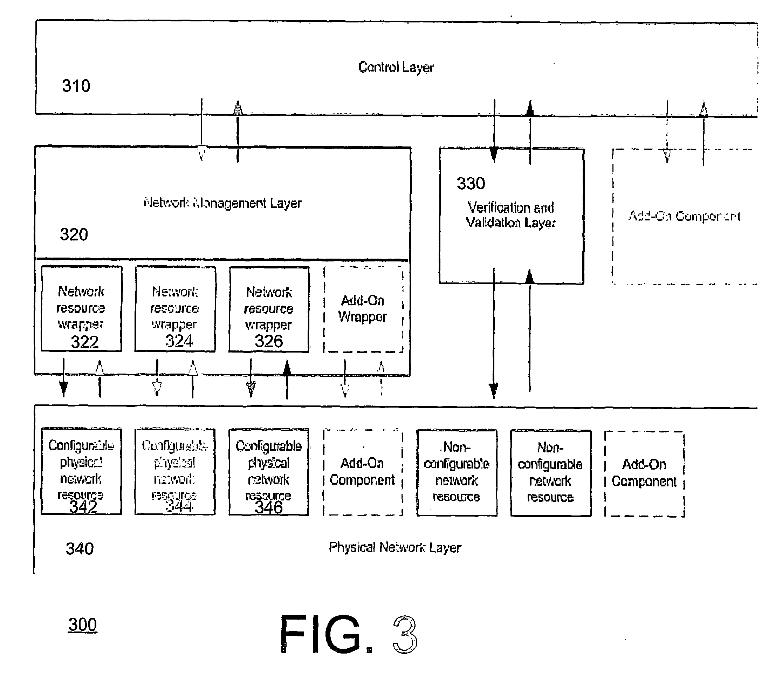

Embodiments of the invention may be abstracted into four layers: the control layer, the network management layer, the verification and validation layer, and the physical network layer. FIG. 3 is block diagram illustrating an embodiment of the invention abstracted into four layers. In alternative embodiments of the invention, the functions may be abstracted into more layers or fewer layers. FIG. 3 includes control layer 310, network management layer 320, verification and validation layer 330, and physical network layer 340.

Control layer 310 may provide a single control point for functions provided by embodiments of the invention. Control layer 310 may be accessed through a console directly on a node in close proximity to the network or through a remote login session (e.g., Telnet). The functions of control layer 310 include generating network scenarios and directing the other layers to configure and transition the network based on the generated network scenarios, in an embodiment of the invention.

Network scenarios may be generated randomly or may be based on predefined network configurations, in an embodiment of the invention. Also, control layer 310 may generate a series of network scenarios back-to-back. Each series of network scenarios can be reproduced by supplying a seed logged in past scenarios, in an embodiment of the invention.

Control layer 310 determines the current physical layout and state of the network based on its interactions with network management layer 320 and verification and validation layer 330, in an embodiment of the invention. As will be further described below, control layer 310 accesses network management layer 320 to perform network configurations and network transitions. Transitioning a node broadly refers to, for example, transitioning a node from a first network interface to a second interface, and/or from a first subnet to a second subnet, and/or from a first VLAN to a second VLAN, and/or from a first topology to a second topology. The term network transition refers to transitioning one or more nodes within the network.

Network management layer 320 provides a number of functions including network configurations, network transitions, and maintenance of current network state information, in an embodiment of the invention. For ease of discussion the term configure is hereinafter used to mean both configure and reconfigure. Network management layer 320 may be a stand-alone component for managing and reconfiguring network components. In alternative embodiments of the invention, network management layer 320 functions in association with the other layers illustrated in FIG. 3. In such an embodiment, the other layers may obtain network state information from network management layer 320.

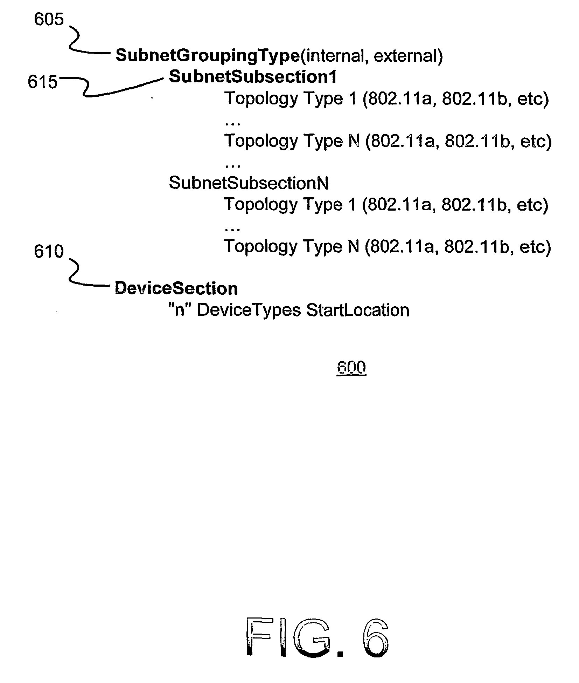

Network management layer 320, in an embodiment of the invention, is responsible for configuring networks and transitioning networks. As is further discussed below in regard to FIG. 6, network resource wrappers 322, 324, and 326 may be used to configure and transition networks. In addition, network management layer 320 may maintain IP address allocation for network components and generate a readable text file that reports each IP address to facilitate communication across the network. After each network configuration and/or transition, network management layer 320 may generate a snapshot of the current network state.

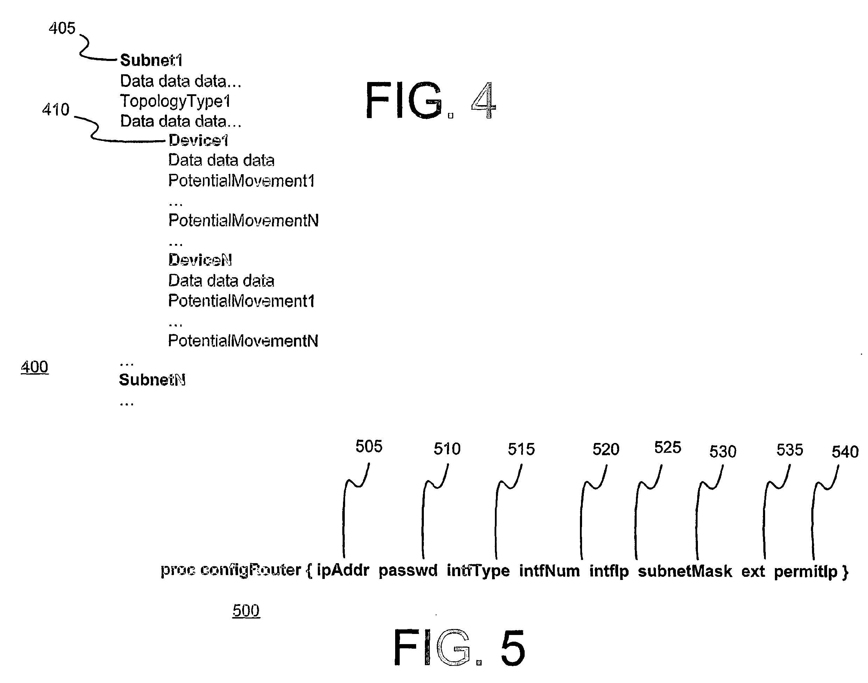

FIG. 4 is an illustration of an exemplary current network state snapshot 400. The illustrated embodiment of current network state snapshot 400 is organized according to one or more subnets sections (e.g., subnet section 405). Each subnet section contains information about one or more network components within the subnet (e.g., node section 410). Node section 410 includes information about potential movement. Information about potential movement may include a list of network topologies based on network topologies and interfaces available to the node. For example, if a node contains an 802.11a network adaptor (and an 802.11a access point exists on the network), the node is able to make a transition to a wireless network connection. Network state snapshot 400 is more fully described in related U.S. patent application Ser. No. 10/611,786.

After a network transition, multiple sections of network state snapshot 400 may be updated since some network transitions affect multiple network components. Network management layer 320 uses network resource wrappers to programmatically configure network components, in an embodiment of the invention. Network resource wrappers abstract the functionality of a network component in a standardized way that allows network components to be interchanged when the components provide the same (or similar) functionality, in an embodiment of the invention. The term programmatically broadly refers to action performed by a software, hardware, and/or firmware resource of one or more network components.

FIG. 5 is an exemplary illustration of network resource wrapper function call 500. Network resource wrapper function call 500 may be used, for example, to configure a router. A person of ordinary skill in the art appreciates that similar network components may be configured with similar network resource wrappers. In an embodiment of the invention, there is a network resource wrapper corresponding to each configurable network component in a network. Table 1 provides a description of the fields of exemplary network resource wrapper function call 500.

**TABLE 1**

| Field | Description |
|---|---|
| IpAddr 505 | IpAddr 505 is the IP address from which the router can be configured, in an embodiment of the invention. |
| Passwd 510 | Passwd 510 may be used to, for example, enable a Telnet session to the router. |
| IntfType 515 | IntfType 515 represents the type of interface to be modified (e.g., Ethernet) on the router. |
| IntfNum 520 | IntfNum 520 is the number of the interface to be modified, in an embodiment of the invention. |
| IntfIp 525 | IntfIP 525 provides the new IP address for the interface, in an embodiment of the invention. |
| SubnetMask 530 | SubnetMask 530 provides the subnet mask for the subnet with which the interface is associated. |
| Ext 535 | Ext 535 indicates whether the interface is "inside" or "outside" of a VPN, in an embodiment of the invention. |
| PermitIP 540 | PermitIP 540 represents IP addresses that are permitted on the interface, in an embodiment of the invention. |

Referring again to FIG. 3, verification and validation layer 330 abstracts all devices that are used to verify and validate the current network configuration. These devices may include, for example, packet sniffers, traffic generators, and other network validation devices. In an embodiment of the invention, third party verification tools and/or proprietary tools can be added to this layer to provide seamless accessibility to a wide range of network analysis and traffic generation tools.

In an embodiment of the invention, the network validation devices are mobile. For example, during network scenario execution, network validation devices may be placed on the particular subnet that requires validation. In contrast, conventional network validation typically involves the manual movement of validation devices from one subnet to another, and/or one VLAN to another, and/or one network interface to another.

Control layer 310 interoperates with verification and validation layer 330 to perform graceful state recovery, in an embodiment of the invention. During the execution of a network scenario, verification and validation layer 330 detects and logs results to report to the control layer. Control layer 310 determines whether to perform graceful state recovery based on the errors, if any, logged and reported by the verification and validation layer. Graceful state recovery refers to reconfiguring network components to a state they were in before an error occurs during the execution of a network scenario.

Physical network layer 340 contains the physical network resources of network 300 (e.g., physical network resources 342, 344, and 346). In an embodiment of the invention, physical network resources 342, 344, and 346 correspond to the network resource wrappers 322, 324, and 326 described above with respect to FIG. 5. Control layer 310 may request the functionality of the physical network resources 342, 344, and 346 through a network configuration request.

FIG. 6 illustrates exemplary network configuration request 600. Network configuration request 600 includes subnet group section 605 and device section 610. Subnet group section 605 may be used to organize a plurality of subnet subsections (e.g., subnet subsection 615). Each subnet subsection may list information about the type of network topology requested for the subnet. For example, a particular subnet may include both wired and wireless network infrastructure. Device section 610 may include information about nodes within a requested network configuration and a start position for mobile nodes within a requested network configuration. Network configuration requests are more fully described in related U.S. patent application Ser. No. 10/611,786.

In operation, control layer 310 may send a network configuration request to network management layer 320- Network management layer 320, in turn, may use network resource wrappers to programmatically configure the physical resources in physical network layer 340. When new physical resources are added to network 300, corresponding network wrappers may be written to network management layer 320 to abstract the functionality of the new resource. In an embodiment of the invention, non-configurable network resources may be added and/or removed from network 300 at will because network resource wrappers are not needed to interact with non-configurable network resources.

### INTERACTIONS AMONG THE LAYERS

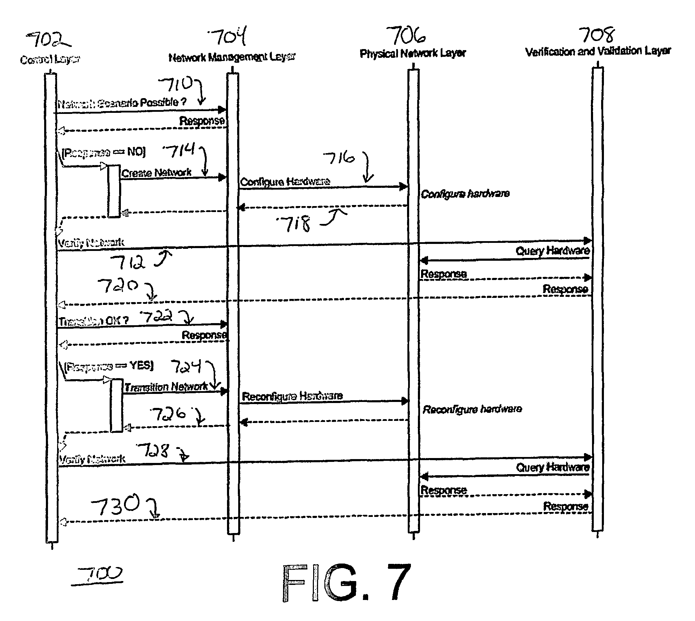

FIG. 7 is a conceptual illustration of selected interactions between abstract functional layers in network 700, according to an embodiment of the invention. Network 700 includes control layer 702, network management layer 704, physical network layer 706, and verification and validation layer 708. A person of ordinary skill in the art will appreciate that, in alternative embodiment embodiments of the invention, network 700 may include more layers or fewer layers.

A user may provide an input to initiate a network scenario, in an embodiment of the invention (not shown). Control layer 702 queries network management layer 704 to determine if executing the network scenario is possible given the current network configuration at 710. If the network scenario is supported in the current network configuration, control layer 702 initiates network verification and validation at 712.

Otherwise control layer 702 resolves the network scenario into a network configuration and creates a corresponding network configuration request at 714. The network configuration request may contain one or more subnets as well as the starting position on the network for mobile nodes. Network management layer 704 configures the network at 716 and reports success or failure of the configuration at 718. If network management layer 704 does not report any failures occurring during the configuration process, control layer 702 triggers the verification and validation layer 708 at 712. Verification and validation layer 708 performs network verification and/or validation tests and reports the findings to control layer 702 at 720.

A network scenario may include transitioning one or more nodes. For example, a network scenario may include transitioning a node from a wired LAN connection to a wireless LAN connection. Control layer 702 queries network management layer 704 to determine whether a transition is supported by the network configuration at 722. If the transition is supported then control layer 702 requests the transition at 724. Network management layer 704 reports success or failure of the transition at 726. If the transition is successful, control layer 702 prompts verification and validation layer 708 to perform appropriate tests at 728 and report the findings to control layer 702 at 730.

Embodiments of the invention may iterate the network configuration and transition processes to enable multiple network scenarios to occur one after another. Alternatively, the network scenario process may terminate after a single iteration. In such an embodiment, the findings of the completed network scenario may be reported to a user and a pseudo-random seed to reproduce the network scenario may be stored.

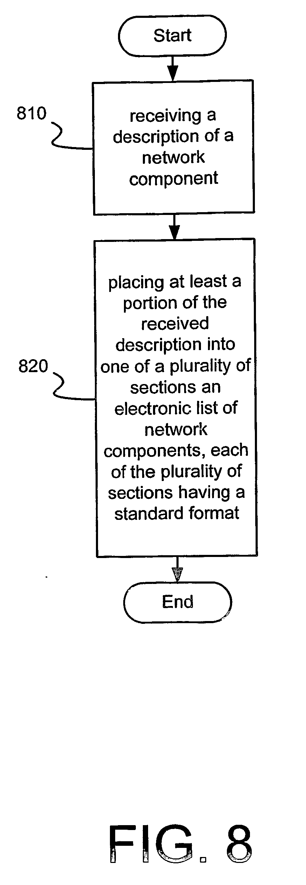

Turning now to FIG. 8, the particular methods associated with embodiments of the invention are described in terms of computer software and hardware with reference to a flowchart. The methods to be performed by a control layer and/or a management layer may constitute state machines or computer programs made up of computer-executable instructions. Describing the methods by reference to a flowchart enables one of ordinary skill in the art to develop such programs including such instructions to carry out the methods on suitably configured computing devices (e.g., one or more processors of a network element) executing the instructions from computer-accessible media. The computer-executable instructions may be written in a computer programming language or may be embodied in firmware logic. If written in a programming language conforming to a recognized standard, such instructions can be executed on a variety of hardware platforms and for interface to a variety of operating systems. In addition, embodiments of the invention are not described with reference to any particular programming language. It will be appreciated that a variety of programming languages may be used to implement the teachings of the invention as described herein. Furthermore, it is common in the art to speak of software, in one form or another (e.g., program, process, procedure, agent, application, etc.), as taking an action or causing a result. Such expressions are merely a shorthand way of saying that execution of the software by a computing device causes the device to perform an action or produce a result. For ease of discussion, the entities performing the functions of each layer are hereinafter referred to as agents. For example, the entity (or entities) performing the functions of the control layer is referred to as the control agent. An agent may be executable content, control logic, firmware, or some combination thereof, in an embodiment of the invention.

FIG. 8 is a flow diagram illustrating certain aspects of a method for describing network components and their relationships, according to an embodiment of the invention. Referring to process block 810, a network management agent (not shown) receives a description of a network component. In an embodiment of the invention, a user (e.g., a network administrator) provides the received description. In alternative embodiments of the invention, the received description may be accessed from a memory device of the network component. In an embodiment of the invention, the network management agent resides on a DHCP server. In an alternative embodiment of the invention, the network management agent may reside on a control node. A person of ordinary skill in the art appreciates that the network management agent may reside on any of a number of different network components or may be distributed among a number of network components.

Referring to process block 820, in an embodiment of the invention, the network management agent places at least a portion of the received description into one of a plurality of sections of an electronic list of network components (e.g., one of the sections of network resource and association file 200, shown in FIG. 2). Each section of the list of network components has a standard format, in an embodiment of the invention. For example, the router section may include one or more router section elements. Each router section element includes one more router section interface elements to describe the router interfaces, in an embodiment of the invention. For examples of various sections of a list of network components having a standard format see, for example, network resource and association file 200, shown in FIG. 2.

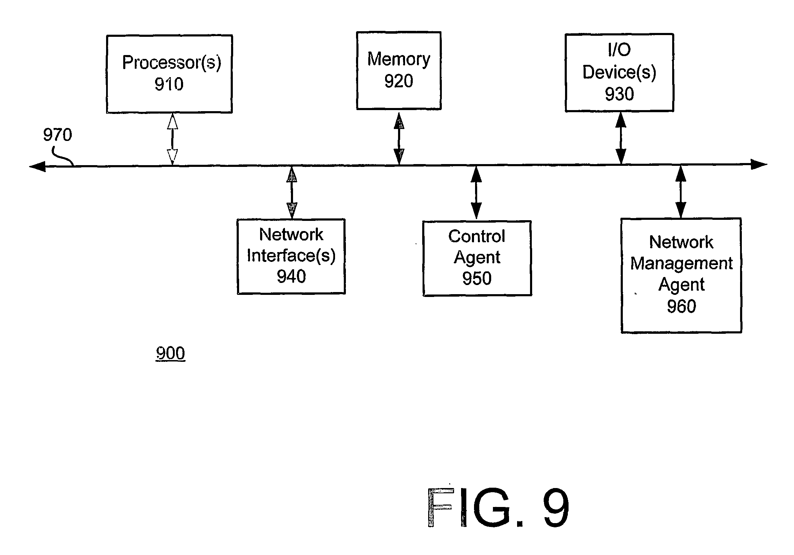

FIG. 9 is a simplified block diagram of selected elements of exemplary node 900, implemented according to an embodiment of the invention. Node 900 may include: one or more processor(s) 910, memory 920, one or more Input/Output interfaces 930, network interface(s) 940, control agent 950, network management agent 960. The illustrated elements may be connected together through system interconnect 970. Processor(s) 910 may include a microprocessor, microcontroller, field programmable gate array (FPGA), application specific integrated circuit (ASIC), central processing unit (CPU), programmable logic device (PLD), and similar devices that access instructions from system storage (e.g., memory 920), decode them, and execute those instructions by performing arithmetic and logical operations. In some embodiments of the invention, processor(s) 920 is implemented with a plurality of processors.

Memory 920 may encompass a wide variety of memory devices including read-only memory (ROM), erasable programmable read-only memory (EPROM), electrically erasable programmable read-only memory (EEPROM), random access memory (RAM), non-volatile random access memory (NVRAM), cache memory, flash memory, and other memory devices. Memory 920 may also include one or more hard disks, floppy disks, ZIP disks, compact disks (e.g., CD-ROM), digital versatile/video disks (DVD), magnetic random access memory (MRAM) devices, and other system-readable media that store instructions and/or data. Memory 920 may store program modules such as routines, programs, objects, images, data structures, program data, and other program modules that perform particular tasks or implement particular abstract data types that facilitate system use.

One or more I/O interfaces 930 may include a hard disk drive interface, a magnetic disk drive interface, an optical drive interface, a parallel port, serial controller or super I/O controller, serial port, universal serial bus (USB) port, a display device interface (e.g., video adapter), a sound card, modem, and the like.

Network interface(s) 940 may include a wide variety of software, hardware, and/or firmware to interface node 900 with an associated network (not shown). In an embodiment of the invention, network interface 940 includes both wired (e.g., local area network) interfaces and wireless (e.g., wireless local area network) interfaces. Network interface(s) 940 may include network interface card(s) and/or chipsets that provide a network interface.

Control agent 950 enables node 900 to act as a single control point for a network to which node 900 is connected. Control agent 950 may be executable content, control logic (e.g., ASIC, PLD, FPGA, etc.), firmware, or some combination thereof, in an embodiment of the invention. In embodiments of the invention in which control agent 950 is executable content, it may be stored in memory 920 and executed by processor(s) 910.

Network management agent 960 enables node 900 to perform network configuration changes and network transitions, in an embodiment of the invention. Network management agent 960 may be executable content, control logic (e.g., ASIC, PLD, FPGA, etc.), firmware, or some combination thereof, in an embodiment of the invention. In embodiments of the invention in which network management agent 960 is executable content, it may be stored in memory 920 and executed by processor(s) 910. In the illustrated embodiment of the invention, network management agent 960 resides on the same node as control agent 950. In alternative embodiments of the invention, control agent 950 and network management agent 960 reside on separate nodes. In yet other alternative embodiments of the invention, control agent 950 and/or network management agent 960 are distributed across more than one node.

System interconnect 970 permits communication between the various elements of node 970. System interconnect 970 may include a wide variety of signal lines including one or more of a memory bus, peripheral bus, local bus, host bus, bridge, optical, electrical, acoustical, and other propagated signal lines.

FIG. 10 is a block diagram of selected elements of exemplary network 1000, implemented according to an embodiment of the invention. Network 1000 includes control node 1005, DHCP server 1010, router 1015, VLAN switch 1020, VPN 1025, hub 1030, and node 1035, power switch serial controller device 1040, and access point 1045.

Control node 1005 provides a single control point for executing network configurations, network transitions, and/or network scenarios, in an embodiment of the invention. A control agent (e.g., control agent 950) resides on control node 1005 in an embodiment of the invention. In alternative embodiments of the invention, a control agent and a network management agent (e.g., network management agent 960) reside on control node 1005. Control node 1005 may be a general purpose computing device containing a control agent, in an embodiment of the invention.

DHCP server 1010 provides network administrative functions in an embodiment of the invention. For example, DHCP server 1010 may provide IP addresses, subnet masks, and/or gateway information to network components of network 1000. The DHCP server may associate one or more network interfaces with corresponding IP address information (e.g., IP address, subnet mask, and gateway). The associations between network interfaces and corresponding IP address information determine which nodes receive which network administrative functions, in an embodiment of the invention. DHCP servers are well known to those of ordinary skill in the art and will not be further described except as to how they relate to embodiments of the invention. In an embodiment of the invention a network management agent resides on DHCP server 1010. In such an embodiment of the invention, DHCP server 1010 may be referred to as a network management node. The term network management node broadly refers to a node on which a network management agent (or a portion of a network management agent) resides.

Router 1015 provides a number of network interfaces in an embodiment of the invention. Each network interface may be associated with IP address information (e.g., interface IP address and subnet) to enable the exchange of packets with the interface. Routers are well known to those of ordinary skill in the art and will not further described except as to how they relate to embodiments of the invention.

VLAN switch 1020 provides a plurality of ports and supports a plurality of VLANs, in an embodiment of the invention. Each supported VLAN may include one or more ports. Each port may be connected to one or more network components. VLAN switch 1020 enables an embodiment of the invention to group hubs together programmatically into logical subnets. VLAN switches are well known to those of ordinary skill in the art and will not be further described except as to how they relate to embodiments of the invention.

VPN 1025 provides a mechanism for secure transactions in an embodiment of the invention. In some embodiments of the invention, one or VPNs employ static IP address configures. In such embodiments of the invention, a network management agent may create the specific subnets used to communicate with the statically configured VPN. This may be accomplished, for example, by configuring the IP addresses on the DHCP server with the subnet IP addresses that correspond to the specific VPN. In addition, router 1015 may be configured to isolate network traffic on either side of the VPN so that only VPN traffic is routed. Internal traffic refers to traffic within the VPN (or firewall) and external traffic refers to traffic outside of the VPN (or firewall). VPNs are well known to those of ordinary skill in the art and will not be further described except as to how they relate to embodiments of the invention.

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the invention.

Similarly, it should be appreciated that in the foregoing description of exemplary embodiments of the invention, various features of the invention are sometimes grouped together in a single embodiment, figure, or description thereof for the purpose of streamlining the disclosure aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

## Claims

1. A method comprising:
receiving a description of a network component (810); and
placing at least a portion of the received description into one of a plurality of sections of an electronic list of network components, each of the plurality of sections having a standard format (820), wherein each of the plurality of sections corresponds to a capability of a network component, and further wherein the electronic list of network components includes
a dynamic network device section (202) to contain
a description of one or more network components whose IP addresses may change over time and that can be moved from one location on a network to another location,
a non-dynamic network device section (204) to contain a description of one or more network components having a static IP address, and
a power management section (206) to contain a description of one or more power management modules to programmatically apply power to a network component.

2. The method of claim 1, wherein
receiving the description of the network component includes receiving a description of a dynamic network device; and
placing at least a portion of the received description into one of a plurality of sections includes placing the received description in a dynamic network device section of the electronic list of network components.

3. The method of claim 2, wherein
the dynamic network device section includes a dynamic network device section element to describe a dynamic network device.

4. The method of claim 3, wherein
the dynamic network device section element includes a data element to describe a network interface of the dynamic network device.

5. The method of claim 4, wherein
the data element includes an information element to store a Media Access Control (MAC) address of the network interface of the dynamic network device.

6. The method of claim 1, wherein
receiving the description of the network component includes receiving a description of a non-dynamic network device; and
placing at least a portion of the received description into one of a plurality of sections includes placing the received description in a non-dynamic network device section of the electronic list of network components.

7. The method of claim 6, wherein
the non-dynamic network device section includes a non-dynamic network device section element to describe a non-dynamic network device.

8. The method of claim 7, wherein
the non-dynamic network device section element includes a data element to store IP address information associated with the non-dynamic network device.

9. The method of claim 1, wherein
receiving the description of the network component includes receiving a description of a power management device; and
placing at least a portion of the received description into one of a plurality of sections includes placing the received description in a power management device section of the electronic list of network components.

10. The method of claim 9, wherein
the power management device section includes a list of power management devices.

11. The method of claim 10, wherein
the power management device list includes an association element to specify a network component associated with the described power management device.

12. The method of claim 1, wherein
receiving the description of the network component includes receiving a description of a hub; and
placing at least a portion of the received description into one of a plurality of sections includes placing the received description in a hub section of the electronic list of network components.

13. The method of claim 12, wherein
the hub section includes a hub section element to describe a hub.

14. The method of claim 13, wherein
the hub section element includes a data element having an association element to specify network components associated with the described hub.

15. The method of claim 1, wherein
receiving the description of the network component includes receiving a description of a Virtual Local Area Network (VLAN) switch; and
placing at least a portion of the received description into one of a plurality of sections includes placing the received description in a VLAN switch section of the electronic list of network components.

16. The method of claim 15, wherein
the VLAN switch section includes
a data element to describe the VLAN switch; and
a data element to describe a port of the VLAN switch.

17. The method of claim 16, wherein
the data element includes an association element to specify a network component associated with the described port.

18. The method of claim 1, wherein
receiving the description of the network component includes receiving a description of a router; and
placing at least a portion of the received description into one of a plurality of sections includes placing the received description in a router section of the electronic list of network components.

19. The method of claim 18, wherein
the router section includes
a data element to specify a router; and
a router interface data element to describe a router interface of the specified router.

20. The method of claim 1, wherein
receiving the description of the network component includes receiving a description of a Dynamic Host Configuration Protocol (DHCP) server; and placing at least a portion of the received description into one of a plurality of sections includes placing the received description in a DHCP server section of the electronic list of network components.

21. The method of claim 20, wherein
the DHCP server section includes a DHCP server section element to describe the DHCP server.

22. The method of claim 21, wherein
the DHCP server section element includes
a data element to specify the DHCP server; and
a DHCP server interface data element to describe an interface of the DHCP server.

23. A system comprising:
a first network component; and
a second network component coupled with the first network element through a wireless local area network, the second network component having a processor and logic executable thereon to
receive a description of the first network component (810); and
place at least a portion of the received description into one of a plurality of sections of an electronic list of network components, each of the plurality of sections having a standard format (820), wherein each of the plurality of sections corresponds to a capability of a network component, and further wherein the electronic list of network components includes
a dynamic network device section (202) to contain a description of one or more network components whose IP addresses may change over time and that can be moved from one location on a network to another location,
a non-dynamic network device section (204) to contain a description of one or more network components having a static IP address, and
a power management section (206) to contain a description of one or more power management modules to programmatically apply power to a network component.

24. The system of claim 23, wherein
the first network component is a dynamic network device; and
to place at least a portion of the received description into one of a plurality of sections includes to place the received description in a dynamic network device section of the electronic list of network components.

25. The system of claim 24, wherein
the dynamic network device section includes a dynamic network device section element to describe the dynamic network device.

26. The system of claim 25, wherein
the dynamic network device section element includes a data element to describe a network interface of the dynamic network device.

27. The system of claim 26, wherein
the data element includes an information element to store a Media Access Control (MAC) address of the network interface of the dynamic network device.

## Patentansprüche

1. Verfahren, wobei
eine Beschreibung einer Netzwerkkomponente (810) empfangen wird, und
mindestens ein Teil der empfangenen Beschreibung in einen von mehreren Abschnitten einer elektronischen Liste von Netzwerkkomponenten eingesetzt wird, wobei jeder der mehreren Abschnitte ein Standardformat (820) aufweist, wobei jeder der mehreren Abschnitte einer Fähigkeit einer Netzwerkkomponente entspricht, und wobei ferner die elektronische Liste von Netzwerkkomponenten umfasst:
einen dynamischen Netzwerkgeräteabschnitt (202) zur Aufnahme einer Beschreibung einer oder mehrerer Netzwerkkomponenten, deren IP-Adressen sich über die Zeit ändern können und die von einem Ort in einem Netzwerk zu einem anderen Ort bewegt werden können,
einen nicht-dynamischen Netzwerkgeräteabschnitt (204) zur Aufnahme einer Beschreibung einer oder mehrerer Netzwerkkomponenten, die eine statische IP-Adresse aufweisen, und
einen Leistungsverwaltungsabschnitt (206) zur Aufnahme einer Beschreibung eines oder mehrerer Leistungsverwaltungsmodule, um Leistung programmentsprechend einer Netzwerkkomponente zuzuführen.

2. Verfahren nach Anspruch 1, wobei
beim Empfang der Beschreibung der Netzwerkkomponente eine Beschreibung eines dynamischen Netzwerkgeräts empfangen wird, und
beim Einsetzen mindestens eines Teils der empfangenen Beschreibung in einen von mehreren Abschnitten die empfangene Beschreibung in einen dynamischen Netzwerkgeräteabschnitt der elektronischen Liste von Netzwerkkomponenten eingesetzt wird.

3. Verfahren nach Anspruch 2, wobei
der dynamische Netzwerkgeräteabschnitt ein dynamisches Netzwerkgeräte-Abschnittselement zum Beschreiben eines dynamisches Netzwerkgeräts umfasst.

4. Verfahren nach Anspruch 3, wobei
das dynamische Netzwerkgeräte-Abschnittselement ein Datenelement zum Beschreiben einer Netzwerkschnittstelle des dynamischen Netzwerkgeräts umfasst.

5. Verfahren nach Anspruch 4, wobei
das Datenelement ein Informationselement zum Speichern einer Media Access Control (MAC) Adresse der Netzwerkschnittstelle des dynamischen Netzwerkgeräts umfasst.

6. Verfahren nach Anspruch 1, wobei
beim Empfang der Beschreibung der Netzwerkkomponente eine Beschreibung eines nicht-dynamischen Netzwerkgeräts empfangen wird, und
beim Einsetzen mindestens eines Teils der empfangenen Beschreibung in einen von mehreren Abschnitten die empfangene Beschreibung in einen nicht-dynamischen Netzwerkgeräteabschnitt der elektronischen Liste von Netzwerkkomponenten eingesetzt wird.

7. Verfahren nach Anspruch 6, wobei
der nicht-dynamische Netzwerkgeräteabschnitt ein nicht-dynamisches Netzwerkgeräte-Abschnittselement zum Beschreiben eines nicht-dynamischen Netzwerkgeräts umfasst.

8. Verfahren nach Anspruch 7, wobei
das nicht-dynamische Netzwerkgeräte-Abschnittselement ein Datenelement zum Speichern von mit dem nicht-dynamischen Netzwerkgerät verknüpfter IP-Adressinformation umfasst.

9. Verfahren nach Anspruch 1, wobei
beim Empfang der Beschreibung der Netzwerkkomponente eine Beschreibung eines Leistungsverwaltungsgeräts empfangen wird, und
beim Einsetzen mindestens eines Teils der empfangenen Beschreibung in einen von mehreren Abschnitten die empfangene Beschreibung in einen Leistungsverwaltungs-Geräteabschnitt der elektronischen Liste von Netzwerkkomponenten eingesetzt wird.

10. Verfahren nach Anspruch 9, wobei
der Leistungsverwaltungs-Geräteabschnitt eine Liste von Leistungsverwaltungsgeräten umfasst.

11. Verfahren nach Anspruch 10, wobei
die Leistungsverwaltungs-Geräteliste ein Verknüpfungselement zum Spezifizieren einer mit dem beschriebenen Leistungsverwaltungsgerät verknüpften Netzwerkkomponente umfasst.

12. Verfahren nach Anspruch 1, wobei
beim Empfang der Beschreibung der Netzwerkkomponente eine Beschreibung eines Netzknotens empfangen wird, und
beim Einsetzen mindestens eines Teils der empfangenen Beschreibung in einen von mehreren Abschnitten die empfangene Beschreibung in einen Netzknotenabschnitt der elektronischen Liste von Netzwerkkomponenten eingesetzt wird.

13. Verfahren nach Anspruch 12, wobei
der Netzknotenabschnitt ein Netzknoten-Abschnittselement zum Beschreiben eines Netzknotens umfasst.

14. Verfahren nach Anspruch 13, wobei
das Netzknoten-Abschnittselement ein Datenelement umfasst, das ein Verknüpfungselement zum Spezifizieren von mit dem beschriebenen Netzknoten verknüpften Netzwerkkomponenten aufweist.

15. Verfahren nach Anspruch 1, wobei
beim Empfang der Beschreibung der Netzwerkkomponente eine Beschreibung eines virtuellen Iokalen Netzwerk (VLAN) Switches empfangen wird, und
beim Einsetzen mindestens eines Teils der empfangenen Beschreibung in einen von mehreren Abschnitten die empfangene Beschreibung in einen VLAN-Switch-Abschnitt der elektronischen Liste von Netzwerkkomponenten eingesetzt wird.

16. Verfahren nach Anspruch 15, wobei
der VLAN-Switch-Abschnitt
ein Datenelement, zum Beschreiben des VLAN-Switches und
ein Datenelement, zum Beschreiben eines Ports des VLAN-Switches umfasst.

17. Verfahren nach Anspruch 16, wobei
das Datenelement ein Verknüpfungselement zum Spezifizieren einer mit dem beschriebenen Port verknüpften Netzwerkkomponente umfasst.

18. Verfahren nach Anspruch 1, wobei
beim Empfang der Beschreibung der Netzwerkkomponente eine Beschreibung eines Routers empfangen wird, und
beim Einsetzen mindestens eines Teils der empfangenen Beschreibung in einen von mehreren Abschnitten die empfangene Beschreibung in einen Routerabschnitt der elektronischen Liste von Netzwerkkomponenten eingesetzt wird.

19. Verfahren nach Anspruch 18, wobei
der Routerabschnitt
ein Datenelement, zum Spezifizieren eines Routers und
ein Routerschnittstellen-Datenelement, zum Beschreiben einer Routerschnittstelle des spezifizierten Routers umfasst.

20. Verfahren nach Anspruch 1, wobei
beim Empfang der Beschreibung der Netzwerkkomponente eine Beschreibung eines Dynamic Host Configuration Protocol (DHCP) Servers empfangen wird, und
beim Einsetzen mindestens eines Teils der empfangenen Beschreibung in einen von mehreren Abschnitten die empfangene Beschreibung in einen DHCP-Serverabschnitt der elektronischen Liste von Netzwerkkomponenten eingesetzt wird.

21. Verfahren nach Anspruch 20, wobei
der DHCP-Serverabschnitt ein DHCP-Serverabschnittselement zum Beschreiben des DHCP-Servers umfasst.

22. Verfahren nach Anspruch 21, wobei
das DHCP-Serverabschnittselement
ein Datenelement zum Spezifizieren des DHCP-Servers und
ein DHCP-Serverschnittstellen-Datenelement zum Beschreiben einer Schnittstelle des DHCP-Servers umfasst.

23. System mit
einer ersten Netzwerkkomponente, und
einer zweiten Netzwerkkomponente, die mit dem ersten Netzwerkelement über ein kabelloses lokales Netzwerk gekoppelt ist, wobei die zweite Netzwerkkomponente einen Prozessor und eine darauf ausführbare Logik aufweist, um
eine Beschreibung der ersten Netzwerkkomponente (810) zu empfangen, und
mindestens einen Teil der empfangenen Beschreibung in einen von mehreren Abschnitten einer elektronischen Liste von Netzwerkkomponenten einzusetzen, wobei jeder der mehreren Abschnitte ein Standardformat (820) aufweist, wobei jeder der mehreren Abschnitte einer Fähigkeit einer Netzwerkkomponente entspricht und wobei ferner die elektronische Liste von Netzwerkkomponenten umfasst:
einen dynamischen Netzwerkgeräteabschnitt (202) zur Aufnahme einer Beschreibung einer oder mehrerer Netzwerkkomponenten, deren IP-Adressen sich über die Zeit ändern können und die von einem Ort in einem Netzwerk zu einem anderen Ort bewegt werden können,
einen nicht-dynamischen Netzwerkgeräteabschnitt (204) zur Aufnahme einer Beschreibung einer oder mehrerer Netzwerkkomponenten, die eine statische IP-Adresse aufweisen, und
einen Leistungsverwaltungsabschnitt (206) zur Aufnahme einer Beschreibung von einem oder mehrerer Leistungsverwaltungsmodule, um Leistung programmentsprechend einer Netzwerkkomponente zuzuführen.

24. System nach Anspruch 23, wobei
die erste Netzwerkkomponente ein dynamisches Netzwerkgerät ist, und
beim Einsetzen mindestens eines Teils der empfangenen Beschreibung in einen von mehreren Abschnitten die empfangene Beschreibung in einen dynamischen Netzwerkgeräteabschnitt der elektronischen Liste von Netzwerkkomponenten eingesetzt wird.

25. System nach Anspruch 24, wobei
der dynamische Netzwerkgeräteabschnitt ein dynamisches Netzwerkgeräte-Abschnittselement zum Beschreiben des dynamischen Netzwerkgeräts umfasst.

26. System nach Anspruch 25, wobei
das dynamische Netzwerkgeräte-Abschnittselement ein Datenelement zum Beschreiben einer Netzwerkschnittstelle des dynamischen Netzwerkgeräts umfasst.

27. System nach Anspruch 26, wobei
das Datenelement ein Informationselement zum Speichern einer Media Access Control (MAC) Adresse der Netzwerkschnittstelle des dynamischen Netzwerkgeräts umfasst.

## Revendications

1. Procédé comprenant les étapes consistant à :
recevoir une description d'un composant du réseau (810) ; et
placer au moins une partie de la description reçue dans une section parmi une pluralité de sections d'une liste électronique de composants du réseau, chaque section de la pluralité de sections possédant un format standard (820) ;
dans lequel chaque section parmi la pluralité de sections correspond à une capacité d'un composant du réseau ; et
dans lequel la liste électronique de composants du réseau comprend :
une section de dispositifs dynamiques du réseau (202) devant contenir une description d'un ou plusieurs composants du réseau dont les adresses IP peuvent changer dans le temps et qui peuvent se déplacer entre un endroit du réseau et un autre endroit ;
une section de dispositifs non dynamiques du réseau (204) devant contenir une description d'un ou plusieurs composants du réseau ayant une adresse IP statique ; et
une section de gestion de l'alimentation électrique (206) devant contenir une description d'un ou plusieurs modules de gestion de l'alimentation électrique afin d'appliquer une alimentation électrique par programme à un composant du réseau.

2. Procédé selon la revendication 1, dans lequel :
l'étape de réception de la description du composant du réseau comprend la réception d'une description d'un dispositif dynamique du réseau ; et
l'étape de placement d'au moins une partie de la description reçue dans une section parmi une pluralité de sections comprend le placement de la description reçue dans une section de dispositifs dynamiques du réseau de la liste électronique de composants du réseau.

3. Procédé selon la revendication 2, dans lequel :
la section de dispositifs dynamiques du réseau comprend un élément de section de dispositifs dynamiques du réseau pour décrire un dispositif dynamique du réseau.

4. Procédé selon la revendication 3, dans lequel :
l'élément de section de dispositifs dynamiques du réseau comprend un élément de données décrivant une interface de réseau du dispositif dynamique du réseau.

5. Procédé selon la revendication 4, dans lequel :
l'élément de données comprend un élément d'informations destiné à stocker une adresse de commande d'accès au support (MAC pour « *Media Access Control* ») de l'interface de réseau du dispositif dynamique du réseau.

6. Procédé selon la revendication 1, dans lequel :
l'étape de réception de la description du composant du réseau comprend la réception d'une description d'un dispositif non dynamique du réseau ; et
l'étape de placement d'au moins une partie de la description reçue dans une section parmi une pluralité de sections comprend le placement de la description reçue dans une section de dispositifs non dynamiques du réseau de la liste électronique de composants du réseau.

7. Procédé selon la revendication 6, dans lequel :
la section de dispositifs non dynamiques du réseau comprend un élément de section de dispositifs non dynamiques du réseau pour décrire un dispositif non dynamique du réseau.

8. Procédé selon la revendication 7, dans lequel :
l'élément de section de dispositifs non dynamiques du réseau comprend un élément de données destiné à stocker des informations d'adresse IP associées au dispositif non dynamique du réseau.

9. Procédé selon la revendication 1, dans lequel :
l'étape de réception de la description du composant du réseau comprend la réception d'une description d'un dispositif de gestion de l'alimentation électrique ; et
l'étape de placement d'au moins une partie de la description reçue dans une section parmi une pluralité de sections comprend le placement de la description reçue dans une section de dispositifs d'alimentation électrique de la liste électronique de composants du réseau.

10. Procédé selon la revendication 9, dans lequel :
la section de dispositifs de gestion de l'alimentation électrique comprend une liste de dispositifs de gestion de l'alimentation électrique.

11. Procédé selon la revendication 10, dans lequel :
La liste de dispositifs de gestion de l'alimentation électrique comprend un élément d'association afin de spécifier un composant du réseau associé avec le dispositif de gestion de l'alimentation électrique qui est décrit.

12. Procédé selon la revendication 1, dans lequel :
l'étape de réception de la description du composant du réseau comprend la réception d'une description d'un concentrateur ; et
l'étape de placement d'au moins une partie de la description reçue dans une section parmi une pluralité de sections comprend le placement de la description reçue dans une section de concentrateurs de la liste électronique de composants du réseau.

13. Procédé selon la revendication 12, dans lequel :
la section de concentrateurs comprend un élément de section de concentrateurs afin de décrire un concentrateur.

14. Procédé selon la revendication 13, dans lequel :
l'élément de section de concentrateurs comprend un élément de données ayant un élément d'association afin de spécifier des composants du réseau associés au concentrateur décrit.

15. Procédé selon la revendication 1, dans lequel :
l'étape de réception de la description du composant du réseau comprend la réception d'une description d'un commutateur de réseau local virtuel (VLAN pour « *Virtual Local Area Network* ») ; et
l'étape de placement d'au moins une partie de la description reçue dans une section parmi une pluralité de sections comprend le placement de la description reçue dans une section de commutateurs de réseaux VLAN de la liste électronique de composants du réseau.

16. Procédé selon la revendication 15, dans lequel la section de commutateurs de réseaux VLAN comprend :
un élément de données pour décrire le commutateur de réseaux VLAN ; et
un élément de données pour décrire un port du commutateur de réseaux VLAN.

17. Procédé selon la revendication 16, dans lequel :
l'élément de données comprend un élément d'association afin de spécifier un composant du réseau associé au port décrit.

18. Procédé selon la revendication 1, dans lequel :
l'étape de réception de la description du composant du réseau comprend la réception d'une description d'un routeur ; et
l'étape de placement d'au moins une partie de la description reçue dans une section parmi une pluralité de sections comprend le placement de la description reçue dans une section de routeurs de la liste électronique de composants du réseau.

19. Procédé selon la revendication 18, dans lequel la section de routeurs comprend :
un élément de données pour spécifier un routeur ; et
un élément de données d'interface de routeur afin de spécifier une interface de routeur pour le routeur spécifié.

20. Procédé selon la revendication 1, dans lequel
l'étape de réception de la description du composant du réseau comprend la réception d'une description d'un serveur de protocole de configuration dynamique des hôtes (DHCP pour « *Dynamic Host Configuration Protocol* ») ; et
l'étape de placement d'au moins une partie de la description reçue dans une section parmi une pluralité de sections comprend le placement de la description reçue dans une section de serveur DHCP de la liste électronique de composants du réseau.

21. Procédé selon la revendication 20, dans lequel :
la section de serveurs DHCP comprend un élément de section de serveurs DHCP pour décrire le serveur DHCP.

22. Procédé selon la revendication 21, dans lequel l'élément de section de serveurs DHCP comprend :
un élément de données afin de spécifier le serveur DHCP ; et
un élément de données d'interface de serveur DHCP afin de décrire une interface du serveur DHCP.

23. Système comprenant :
un premier composant du réseau ; et
un second composant du réseau, couplé au premier composant du réseau par un réseau local sans fil, le second composant du réseau possédant un processeur et de la logique qui peut s'y exécuter, afin de :
recevoir une description du premier composant du réseau (810) ; et
placer au moins une partie de la description reçue dans une section parmi une pluralité de sections d'une liste électronique de composants du réseau, chaque section de la pluralité de sections possédant un format standard (820) ;
dans lequel chaque section parmi la pluralité de sections correspond à une capacité d'un composant du réseau ; et
dans lequel la liste électronique de composants du réseau comprend :
une section de dispositifs dynamiques du réseau (202) devant contenir une description d'un ou plusieurs composants du réseau dont les adresses IP peuvent changer dans le temps et qui peuvent se déplacer entre un endroit du réseau et un autre endroit ;
une section de dispositifs non dynamiques du réseau (204) devant contenir une description d'un ou plusieurs composants du réseau ayant une adresse IP statique ; et
une section de gestion de l'alimentation électrique (206) devant contenir une description d'un ou plusieurs modules de gestion de l'alimentation électrique afin d'appliquer une alimentation électrique par programme à un composant du réseau.

24. Système selon la revendication 23, dans lequel :
le premier composant du réseau est un dispositif dynamique du réseau ; et
le placement d'au moins une partie de la description reçue dans une section parmi une pluralité de sections comprend le placement de la description reçue dans une section de dispositifs dynamiques du réseau de la liste électronique de composants du réseau.

25. Système selon la revendication 24, dans lequel :
la section de dispositifs dynamiques du réseau comprend un élément de section de dispositifs dynamiques du réseau pour décrire un dispositif dynamique du réseau.

26. Système selon la revendication 25, dans lequel :
l'élément de section de dispositifs dynamiques du réseau comprend un élément de données décrivant une interface de réseau du dispositif dynamique du réseau.

27. Système selon la revendication 26, dans lequel :
l'élément de données comprend un élément d'informations destiné à stocker une adresse de commande d'accès au support (MAC pour « *Media Access Control* ») de l'interface de réseau du dispositif dynamique du réseau.
